# FASCICULE DE BREVET EUROPEEN

(11) **EP 3 070 345 B1**
(45) Date de publication et mention de la délivrance du brevet: **31.03.2021**
(21) Numéro de dépôt: 16160673.6
(22) Date de dépôt: 16.03.2016
(51) Int. Cl.: F16B 19/08, G04B 29/04, G04G 17/02

(54) **RIVET D'HORLOGERIE**
UHRNIETE
TIMEPIECE RIVET

(30) Priorité: 17.03.2015 EP 15159493
(43) Date de publication de la demande: 21.09.2016
(73) Titulaire: ROLEX SA, 1211 Genève 26 (CH)
(72) Inventeur: HUMAIR, Hervé, 2350 Saignelégier (CH); JOBARD, Matthieu, 2710 Tavannes (CH); NICOLET, Adrien, 2503 Bienne (CH)
(74) Mandataire: Moinas & Savoye SARL

(56) Documents cités:
- EP-A1- 1 785 783
- EP-A2- 1 691 087
- DE-A1- 10 241 770
- DE-A1- 10 241 770
- JP-A- 2000 352 407
- JP-U- H 058 489
- JP-Y2- S 558 292

## Description

L'invention concerne un rivet d'horlogerie. Elle concerne aussi un mécanisme comprenant un tel rivet. Elle concerne encore un mouvement horloger comprenant un tel rivet ou un tel mécanisme. Elle concerne enfin une pièce d'horlogerie, notamment une montre-bracelet, comprenant un tel rivet, un tel mécanisme ou un tel mouvement.

L'invention concerne enfin un procédé de démontage d'un assemblage riveté.

Les assemblages rivetés sont couramment employés dans le domaine de l'horlogerie, en particulier pour permettre un assemblage fiable et durable d'au moins deux composants horlogers qui peuvent par exemple se présenter sous la forme d'un mobile ou d'une ébauche du mouvement.

Les rivets horlogers se présentent sous la forme d'un composant dont au moins une portion est déformable plastiquement à l'une de ses extrémités, de façon à permettre la solidarisation du rivet avec au moins un composant horloger.

L'étape de déformation plastique du rivet s'effectue classiquement par le biais d'un outil adapté appelé rivoir, dont la géométrie est conformée de sorte à faire épouser la géométrie de la rivure, nom donné à la portion déformable plastiquement du rivet, à celle de l'alésage du composant assemblé.

Le démontage des rivets connus de l'art antérieur peut s'effectuer par la rupture de la rivure, lors par exemple d'une étape de rhabillage d'une pièce d'horlogerie. Cette étape peut s'avérer particulièrement délicate, et n'est pas sans conséquence quant à l'intégrité géométrique et esthétique des composants intégrés à un assemblage riveté. Il s'agit là d'une réelle problématique dans le domaine de l'horlogerie haut de gamme où les exigences en termes d'esthétique et de tolérancement géométrique sont particulièrement élevées.

Il peut donc s'avérer avantageux, lors par exemple d'une étape de rhabillage de la pièce d'horlogerie, de permettre un démontage simple du rivet tout en préservant l'intégrité géométrique et esthétique des composants intégrés à un assemblage riveté.

Des solutions d'assemblages alternatifs aux assemblages rivetés existent mais ne permettent pas de conserver la fiabilité d'assemblage reconnue du rivet conventionnel d'horlogerie.

Le document EP1365295 décrit par exemple une solution d'assemblage de deux composants par le biais d'une goupille fendue dotée de pattes déformables élastiquement qui autorisent à elles seules le montage, ainsi que le démontage de l'assemblage. Si une telle solution permet un démontage aisé de l'assemblage, la rigidité de l'assemblage peut s'avérer être insuffisante dans certains cas d'application, et ne peut donc être considérée comme satisfaisante pour certaines applications.

Le document WO2014/173582 décrit une solution d'assemblage de deux composants dans laquelle les moyens d'assemblage sont distincts des moyens de démontage. Plus particulièrement, la demande de brevet WO2014/173582 divulgue une solution d'emboîtage d'un mouvement horloger, qui met en œuvre des rivets déformables par une étape de thermoformage, de façon à garantir un assemblage rigide entre le mouvement et la carrure d'une pièce d'horlogerie. Dans un mode de réalisation spécifique, ces rivets peuvent être amovibles. Dans ce cas de figure, les rivets sont venus de matière avec des bouchons pourvus de stries prévues pour permettre le chassage et le déchassage des bouchons dans des trous de la carrure. Dans certaines conditions, notamment lors du porter de la montre, en particulier en cas de choc, il existe un risque de déchassage des bouchons des rivets et donc une dégradation de l'assemblage riveté entre le mouvement et la carrure. Une telle solution n'est donc pas acceptable.

Dans le domaine de la mécanique générale, les rivets aveugles (aussi appelés rivets POP *marque déposée*) sont bien connus pour permettre un assemblage aisé et fiable d'au moins deux composants. Ces rivets sont constitués d'un corps creux en alliage déformable, et d'une tige dont une extrémité est renflée. Ce type de rivet est posé avec une pince à riveter, qui tire sur la tige dont le bout renflé pénètre dans le corps du rivet pour réaliser le rivetage. Lorsque le blocage s'effectue, la tige se casse en laissant le rivet en place.

A titre d'exemple, les documents EP1734265 et EP2644909 divulguent des géométries de rivets dont les têtes présentent des conformations pour permettre leur démontage. Il s'agit ici d'exercer sur la tête du rivet une action qu'il n'est pas possible d'exercer sur un rivet horloger vu l'environnement du mécanisme horloger. En effet, il n'est pas envisageable d'exercer des chocs, d'usiner la tête du rivet ou encore de la couper à l'aide d'une pince dans un environnement de mouvement horloger. De telles solutions ne sont pas adaptées pour une application horlogère.

Le document JP2000352407A divulgue une géométrie de rivets avec deux conformations en creux, séparées.

Le but de l'invention est de fournir un rivet permettant de remédier aux inconvénients mentionnés précédemment et d'améliorer les rivets connus de l'art antérieur. En particulier, l'invention propose un rivet simple, permettant de réaliser un assemblage de pièces par rivetage qui soit démontable sans risque d'endommagement des pièces.

Un rivet selon l'invention est défini par la revendication 1.

Différents modes de réalisation du rivet sont définis par les revendications dépendantes 2 à 9.

Un mécanisme selon l'invention est défini par la revendication 10.

Un mouvement selon l'invention est défini par la revendication 11.

Une pièce d'horlogerie selon l'invention est définie par la revendication 12.

Un procédé de démontage d'un assemblage riveté selon l'invention est défini par la revendication 13.

Les figures 1 à 8 représentent, à titre d'exemple, un mode de réalisation d'une pièce d'horlogerie selon l'invention et un mode de réalisation d'un rivet selon l'invention.
La figure 1 est une vue schématique d'un mode de réalisation d'une pièce d'horlogerie selon l'invention, comprenant un rivet selon un mode de réalisation.
La figure 2 est une vue en coupe selon l'axe longitudinal d'un mode de réalisation d'un rivet selon l'invention.
La figure 3 est une vue de dessus du mode de réalisation du rivet selon l'invention.
La figure 4 est une vue de dessous du mode de réalisation du rivet selon l'invention.
La figure 5 est une vue en coupe selon l'axe longitudinal du mode de réalisation du rivet, celui-ci se trouvant mis en place au sein d'un mécanisme.
La figure 6 est une vue de dessus du mode de réalisation du rivet, celui-ci se trouvant mis en place au sein d'un mécanisme.
Les figures 7 et 8 sont des vues en coupe selon l'axe longitudinal du mode de réalisation du rivet, lors de deux étapes d'un procédé de rupture du rivet.
La figure 9 est une vue en coupe partielle du rivet au niveau d'une gorge.

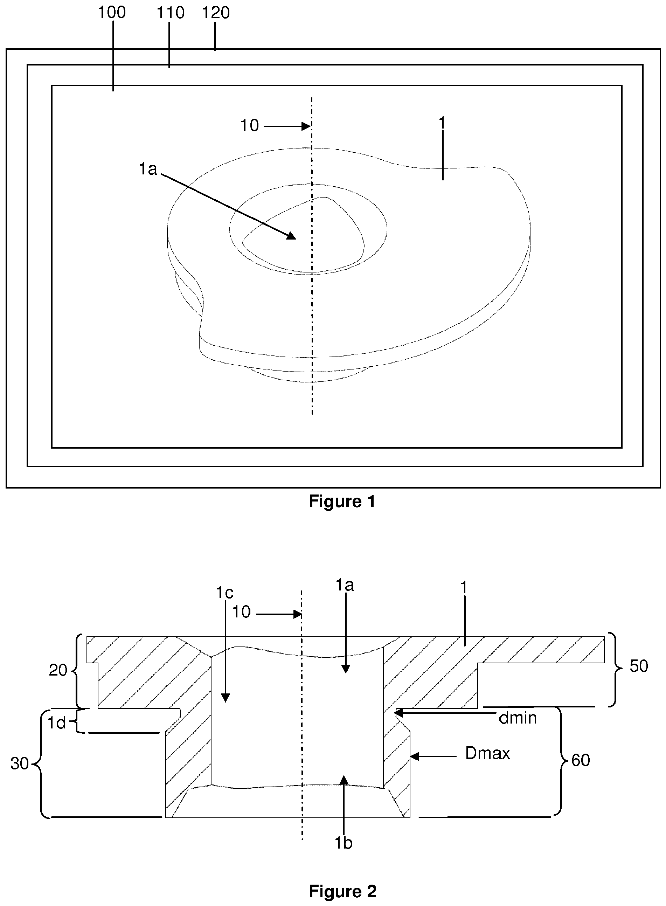

Un mode de réalisation d'une pièce d'horlogerie 120 selon l'invention est décrit ci-après en référence à la figure 1. La pièce d'horlogerie peut notamment être une montre, en particulier une montre-bracelet.

La pièce d'horlogerie comprend un mode de réalisation d'un mouvement d'horlogerie 110 selon l'invention, notamment un mouvement mécanique. Le mouvement d'horlogerie comprend un mode de réalisation d'un mécanisme 100 selon l'invention. Le mécanisme comprend un mode de réalisation d'un rivet horloger 1 selon l'invention.

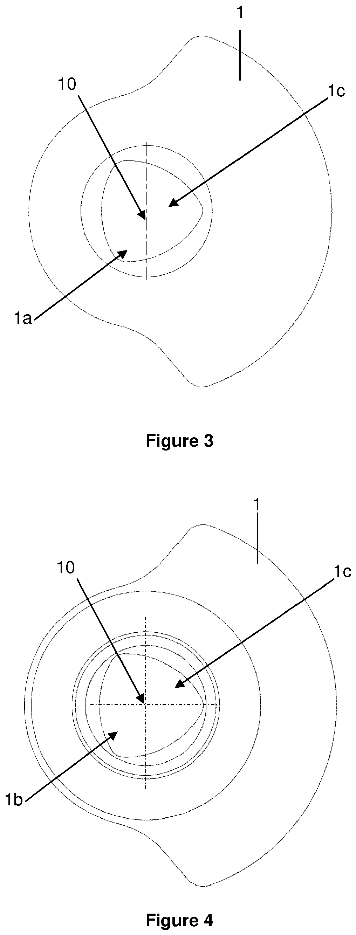

Un mode de réalisation du rivet est décrit en détail en référence aux figures 2 à 9.

Le rivet 1 comprend :
- un axe longitudinal 10 ;
- une première partie 20, en particulier une tête 50 ;
- une deuxième partie 30, en particulier un corps 60,
la première partie comprenant un premier élément 1a de préhension et la deuxième partie comprenant un deuxième élément 1b de préhension.

Selon l'invention, le premier élément 1a de préhension est apte à solliciter mécaniquement la première partie et le deuxième élément 1b de préhension est apte à solliciter mécaniquement la deuxième partie.

Selon l'invention, les premier et deuxième éléments de préhension sont tels qu'ils permettent d'appliquer respectivement sur les première et deuxième parties des actions mécaniques provoquant la rupture, notamment la rupture par cisaillement, des première et deuxième parties du rivet, c'est-à-dire une rupture à l'interface des première et deuxième parties. Avantageusement, la rupture est réalisée selon un plan ou une surface perpendiculaire à l'axe longitudinal du rivet ou sensiblement perpendiculaire à l'axe longitudinal du rivet.

Autrement dit, les premier et deuxième éléments de préhension constituent des éléments d'actionnement en rotation et/ou de blocage en rotation, disposés de part et d'autre du rivet. Plus particulièrement, ils sont prévus pour permettre le cisaillement du corps du rivet sous l'effet d'une rotation antagoniste des deux extrémités du rivet. Le cisaillement du corps du rivet jusqu'à la rupture permet ainsi le démontage des composants prenant part à l'assemblage riveté, et ce sans risque d'affecter l'intégrité géométrique et esthétique des composants initialement assemblés.

Selon l'invention, le premier élément de préhension comprend ou est une première conformation en creux 1a ou empreinte et/ou le deuxième élément de préhension comprend ou est une deuxième conformation en creux 1b ou empreinte.

Chaque conformation en creux forme une portion femelle destinée à coopérer avec une portion mâle d'un outil, de sorte que l'outil puisse entraîner en rotation selon l'axe longitudinal ou puisse transmettre un couple selon l'axe longitudinal.

Selon l'invention, la première conformation en creux 1a et la deuxième conformation en creux 1b sont agencées l'une dans le prolongement de l'autre de sorte à former une seule et unique conformation en creux 1c. Ainsi, les première et deuxième conformations en creux peuvent être définies par de mêmes lignes génératrices. Notamment, ces génératrices peuvent être des génératrices d'un cylindre (au sens mathématique du terme), c'est-à-dire des droites parallèles passant par un point variable décrivant un contour fermé (ou courbe directrice) pour former une surface. Le contour fermé serait ici avantageusement un contour polygonal ou un contour sensiblement polygonal. Le contour fermé est de préférence de section non-circulaire. Par exemple, ce peut être un contour elliptique ou sensiblement elliptique, un contour polygonal ou sensiblement polygonal, un contour triangulaire ou sensiblement triangulaire ou un contour trilobé ou sensiblement trilobé. Ainsi, les première et deuxième conformations en creux peuvent être réalisées facilement.

Les génératrices sont de préférence parallèles à l'axe longitudinal ou sensiblement parallèles à l'axe longitudinal du rivet.

De préférence, la première conformation en creux présente une section non circulaire, en particulier une section polygonale, comme une section triangulaire, ou une section sensiblement polygonale, comme une section trilobée (comme représenté sur les figures 1, 3 et 4), et/ou la deuxième conformation en creux présente une section non circulaire, en particulier une section polygonale, comme une section triangulaire, ou une section sensiblement polygonale, comme une section trilobée (comme représenté sur les figures 1, 3 et 4).

La première conformation en creux est de préférence réalisée au niveau de la tête 50 du rivet ou dans la tête 50 du rivet. La deuxième conformation en creux est de préférence réalisée au niveau du corps 60 du rivet ou dans le corps 60 du rivet.

Alternativement à ce qui a été décrit précédemment, la première conformation en creux peut être une conformation cruciforme ou une conformation en forme de fente adaptée pour coopérer avec un outil de type tournevis.

Autrement dit, les conformations en creux peuvent être sensiblement identiques, voire identiques. Préférentiellement, les conformations en creux sont fabriquées d'un seul tenant, par exemple par le biais d'une découpe débouchante qui traverse l'entier du rivet de manière longitudinale. Préférentiellement encore, une noyure peut être ménagée aux extrémités de chacune des conformations en creux de façon à faciliter l'entrée de l'outil, et ainsi éviter tout risque de marquage du rivet. Les conformations en creux peuvent par exemple être réalisées par déformation plastique ou par usinage.

Le premier élément de préhension peut être orienté selon l'axe longitudinal et/ou le deuxième élément de préhension peut être orienté selon l'axe longitudinal.

Les outils coopérant avec les premier et deuxième éléments de préhension peuvent permettre d'entraîner la première partie et/ou la deuxième partie en rotation autour de l'axe longitudinal. Tout au moins, les outils coopérant avec les premier et deuxième éléments de préhension peuvent transmettre un couple autour de l'axe longitudinal.

Comme vu précédemment, les premier et deuxième éléments de préhension sont avantageusement disposés coaxialement à l'axe longitudinal.

Avantageusement encore, les première et deuxième parties 20, 30 sont séparées par une zone 1d de moindre résistance mécanique, notamment une zone de moindre résistance mécanique orientée sensiblement perpendiculairement à l'axe longitudinal 10, en particulier une zone de moindre résistance mécanique au cisaillement, située à l'interface première - deuxième parties.

L'interface des première et deuxième parties, et en particulier la zone de moindre résistance mécanique, peut être située à l'interface tête - corps, comme c'est le cas dans le mode de réalisation représenté aux figures 1 à 8. Toutefois, alternativement, l'interface des première et deuxième parties, et en particulier la zone de moindre résistance mécanique, peut être située ailleurs qu'à l'interface tête - corps. Dans ce cas, la première partie 20 comprend la tête 50 et une première portion de corps 60 et la deuxième partie 30 comprend une deuxième portion de corps 60.

La zone 1d de moindre résistance mécanique peut comprendre une première gorge, notamment une première gorge annulaire, en particulier une gorge annulaire extérieure, comme dans le mode de réalisation représenté et/ou une deuxième gorge, notamment une deuxième gorge annulaire, en particulier une gorge annulaire intérieure.

La gorge extérieure peut comprendre un diamètre de fond (dmin) inférieur à 0.9 fois, voire inférieur à 0.85 fois, voire inférieur à 0.8 fois le diamètre maximal (Dmax) de la deuxième partie, en particulier du corps.

La gorge intérieure peut comprendre un diamètre de fond supérieur à 0.8 fois, voire supérieur à 0.85 fois, voire supérieur à 0.9 fois le diamètre maximal (Dmax) du corps.

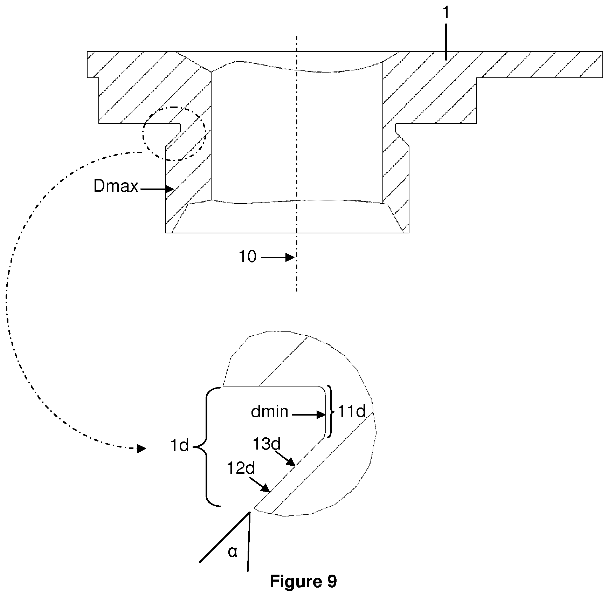

La gorge intérieure et/ou la gorge extérieure présente par exemple une largeur 11d de fond, mesurée selon l'axe longitudinal, comprise entre 0,03 mm et 0,07 mm, notamment 0,05 mm. Comme représenté sur la figure 9, un ou plusieurs flancs 12d de la gorge intérieure et/ou de la gorge extérieure forme un chanfrein 13d avec un angle a, par exemple un chanfrein à 60° ou à 45° relativement à l'axe longitudinal 10, s'étendant du fond de la gorge jusqu'à l'extérieur de la gorge.

Dans tout ce document, par « gorge », il faut entendre tout rétrécissement local de la section d'au moins une portion du rivet, en particulier toute réduction locale notable du diamètre d'une portion du corps du rivet.

Il est à noter que la zone de moindre résistance mécanique peut être constituée par toute forme de section fragilisant localement le rivet. Alternativement, la zone de moindre résistance mécanique peut être mise en œuvre par un ou plusieurs méplats réalisés à l'interface corps - tête ou sur une portion du corps du rivet.

En particulier, la zone de moindre résistance mécanique peut comprendre une première section, notamment une première section selon un plan perpendiculaire à l'axe longitudinal, dont l'aire est inférieure à 2 fois, voire inférieure à 3 fois, voire inférieure à 4 fois l'aire d'une deuxième section du corps 60 du rivet, notamment une deuxième section selon un plan perpendiculaire à l'axe longitudinal.

Enfin, une zone de moindre résistance mécanique peut être constituée à l'interface tête - corps avec un très faible rétrécissement local de section du corps du rivet prenant la forme d'une piqûre ou sans rétrécissement local de section du corps du rivet. En effet, les procédés de fabrication peuvent générer des zones de concentration de contraintes dans le matériau au niveau de telles interfaces. Il s'ensuit que ces zones peuvent présenter des résistances mécaniques réduites.

Avantageusement, le rivet présente une résistance mécanique au cisaillement inférieure à 0.5 mNm, voire inférieure à 0.3 mNm, au niveau de l'interface première partie - deuxième partie.

Un rivet selon l'invention peut être utilisé dans plusieurs applications horlogères. Notamment, le rivet peut comprendre une saillie radiale 1f ou un tenon ou un excentrique ou une roue ou un pignon. Ainsi, le rivet peut par exemple se présenter sous la forme d'un tenon rapporté sur une ébauche, qui n'est pas déplaçable relativement à cette dernière. Ce tenon peut notamment faire office d'axe de pivotement d'un mobile horloger. Celui-ci peut également faire office d'excentrique, notamment d'excentrique de réglage de la position dans le plan d'un élément horloger tel qu'une bascule. Le rivet peut encore se présenter sous la forme d'une roue ou d'un pignon, monobloc ou non, pour permettre l'assemblage d'un mobile denté.

Un outil 4a ; 4b de démontage d'un rivet 1 tel que décrit précédemment ne fait pas partie de l'invention. Un tel outil comprend une conformation mâle 41a ; 41b destinée à venir se loger dans un élément de préhension du rivet.

De préférence, des épaulements 42a et 42b peuvent être prévus au niveau des têtes des outils afin de limiter la pénétration des outils dans les éléments de préhension. Ainsi, chaque outil demeure avantageusement localisé au niveau de la première partie ou de la deuxième partie, sans risque qu'un outil enfoncé trop profondément dans un élément de préhension s'étende dans les première et deuxième parties. Alternativement, une ou deux butées pourraient être prévues dans le trou 1c pour éviter ce problème.

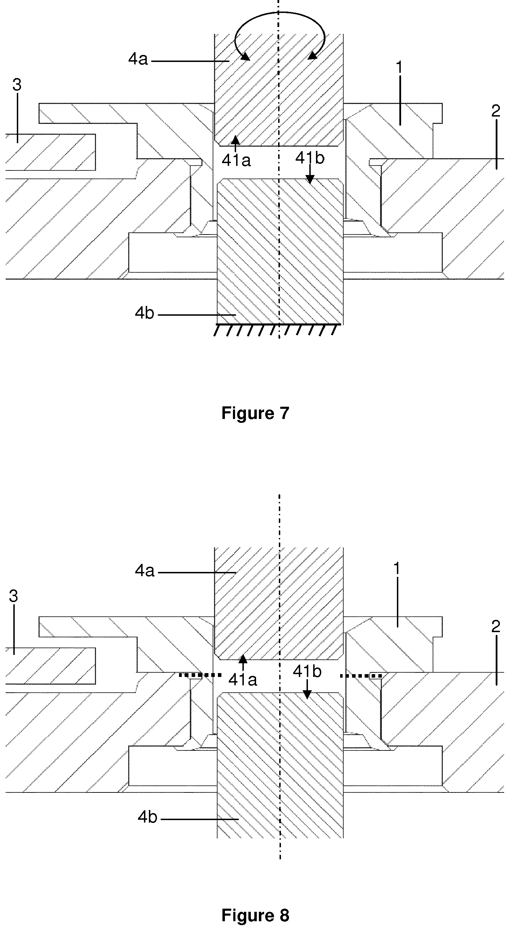

L'invention porte encore sur un procédé de démontage d'un assemblage riveté, c'est-à-dire d'un assemblage de pièces réalisé à l'aide d'un rivet tel que décrit précédemment. Le procédé est illustré par les figures 7 et 8, le rivet n'étant pas encore rompu sur la figure 7 et le rivet étant rompu sur la figure 8.

Le procédé comprend les étapes suivantes :
- saisir la première partie du rivet, notamment par introduction d'un outil dans le premier élément de préhension,
- saisir la deuxième partie du rivet, notamment par introduction d'un outil dans le deuxième élément de préhension,
- exercer une sollicitation mécanique de la première partie sur la deuxième partie, notamment une sollicitation mécanique de cisaillement de la première partie sur la deuxième partie relativement à l'axe longitudinal (10), de sorte à rompre les première et deuxième parties du rivet.

Avantageusement, on exerce une première action mécanique, notamment un premier couple de rotation autour de l'axe longitudinal, sur la première partie et on exerce une deuxième action mécanique, notamment un deuxième couple de rotation autour de l'axe longitudinal, sur la deuxième partie. De préférence, la première action mécanique et la deuxième action mécanique sont opposées. Alternativement, la première action mécanique pourrait être un premier couple de rotation autour d'un axe perpendiculaire ou sensiblement perpendiculaire à l'axe longitudinal 10 de la figure 7 et la deuxième action mécanique pourrait être un deuxième couple de rotation autour d'un axe perpendiculaire ou sensiblement perpendiculaire à l'axe longitudinal 10 de la figure 7.

La première action mécanique est exercée à l'aide d'un premier outil coopérant avec le premier élément de préhension et la deuxième action mécanique est exercée à l'aide d'un deuxième outil coopérant avec le deuxième élément de préhension.

Dans le détail du procédé, dans une première étape, les têtes 41a et 41b d'un outil 4a ; 4b sont chacune prévues pour s'insérer à jeu, voire à moindre jeu, respectivement au sein des conformations en creux 1a, 1b du rivet. Pour ce faire, les têtes 41a, 41b présentent une géométrie sensiblement complémentaire à celles des conformations en creux 1a, 1b. Dans une deuxième étape, la tête 41a est actionnée en rotation autour de l'axe 10 selon l'un ou l'autre des deux sens de rotation de façon à entraîner en rotation la première partie 20 du rivet, tandis que la tête 41b bloque en rotation la deuxième partie 30 du rivet, comme représenté sur la figure 7. L'entraînement de la première partie est représenté par une double flèche sur la figure 7. Le blocage ou l'immobilisation de la deuxième partie est représenté par un symbole de masse sur la figure 7. Alternativement, la tête 41b peut également être actionnée en rotation autour de l'axe 10 de manière à entraîner en rotation la deuxième partie de rivet en sens contraire de la première partie. Alternativement encore, la tête 41b peut être actionnée en rotation autour de l'axe 10 selon l'un ou l'autre des deux sens de rotation de façon à entraîner la deuxième partie 30 du rivet, tandis que la tête 41a bloque en rotation la première partie du rivet. Cette deuxième étape induit la désolidarisation des première et deuxième parties du rivet par rupture à leur interface comme illustré sur la figure 8. Les première et deuxième parties peuvent alors être retirées et les pièces de l'assemblage peuvent être séparées.

Dans le mode de réalisation représenté, le rivet prend la forme d'un composant prévu pour délimiter l'ébat axial d'un mobile d'horlogerie 3. Le démontage du mobile 3 requiert la rotation du rivet 1 autour de son axe 10. Le couple nécessaire à la rotation du rivet est d'au moins 3 mNm, voire 10mNm, voire 20 mNm. L'entraînement en rotation du rivet peut s'effectuer par le biais d'un outil doté d'une tête conformée pour coopérer avec le rivet. Préférentiellement, cette tête présente une géométrie sensiblement identique ou sensiblement identique à celle de la tête 41a ou 41b de l'outil 4a ; 4b.

De préférence, le premier élément de préhension ou d'entraînement est adapté de sorte à permettre d'appliquer, notamment d'appliquer via un outil, sur la première partie, un premier couple dans au moins un premier sens autour de l'axe longitudinal du rivet et le deuxième élément de préhension ou d'entraînement est adapté de sorte à permettre d'appliquer, notamment d'appliquer via un outil, sur la deuxième partie, un deuxième couple dans au moins un deuxième sens autour de l'axe longitudinal du rivet, les premier et deuxième sens étant opposés.

Avantageusement, chaque élément de préhension est adapté de sorte à permettre d'appliquer, notamment d'appliquer via un outil, sur une partie, un couple dans le premier sens ou dans le deuxième sens autour de l'axe longitudinal du rivet. Ainsi, lors du démontage, l'horloger a le choix du sens d'application du couple mécanique nécessaire à la rupture du rivet.

Le rivet selon l'invention permet en outre d'assurer toutes les fonctions habituelles d'un rivet conventionnel. Il est à noter que le premier élément de préhension et/ou le deuxième élément de préhension peut être utilisé également pour orienter le rivet en rotation après sa mise en place.

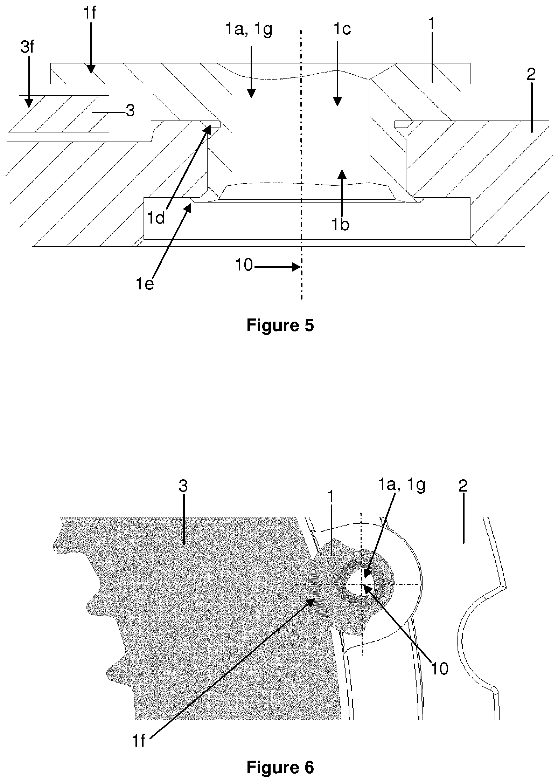

Les figures 5 et 6 illustrent un assemblage dans lequel le rivet 1 est solidarisé classiquement à une ébauche 2 par le biais d'une rivure 1e. Le rivet 1 prend ici la forme d'un composant prévu pour délimiter l'ébat axial d'un mobile d'horlogerie 3. A cet effet, le rivet est doté d'une saillie 1f sensiblement parallèle au plan de l'ébauche, qui est prévue pour coopérer avec une surface 3f du mobile d'horlogerie. Le rivet comporte en outre une conformation en creux 1g qui est prévue pour être actionnée par un outil adapté, de façon à permettre la rotation du rivet autour de son axe longitudinal 10, et donc le déplacement de la saillie 1f en regard du mobile 3, et ainsi permettre le démontage du mobile 3 de l'ébauche 2.

Préférentiellement, la géométrie de la conformation en creux 1g, prévue pour permettre l'entraînement en rotation du rivet, est confondue avec celle de la conformation en creux 1a qui est prévue pour permettre le démontage du rivet.

Comme vu précédemment, le rivet selon l'invention permet de répondre à un besoin de démontage sécurisé d'un assemblage riveté, tout en conservant les propriétés d'assemblage reconnues du rivet conventionnel. Le rivet selon l'invention s'avère être particulièrement avantageux en regard de sa simplicité de mise en œuvre. Celle-ci se traduit par une conformation particulière d'un rivet qui se distingue par des éléments de préhension pour solliciter deux parties du rivet et, éventuellement, une zone de moindre résistance mécanique à l'interface des première et deuxième parties.

## Revendications

1. Rivet (1) d'horlogerie, comprenant :
- un axe longitudinal (10) ;
- une première partie (20), en particulier une tête (50) ;
- une deuxième partie (30), en particulier un corps (60),
la première partie comprenant un premier élément (1a) de préhension apte à solliciter mécaniquement la première partie et la deuxième partie comprenant un deuxième élément (1b) de préhension apte à solliciter mécaniquement la deuxième partie, les premier et deuxième éléments de préhension étant tels qu'ils permettent d'appliquer respectivement sur les première et deuxième parties des actions mécaniques provoquant la rupture à une interface des première et deuxième parties du rivet, le premier élément de préhension comprenant une première conformation en creux et/ou le deuxième élément de préhension comprenant une deuxième conformation en creux, la première conformation en creux et la deuxième conformation en creux étant agencées l'une dans le prolongement de l'autre de sorte à former une seule et unique conformation en creux.

2. Rivet selon la revendication 1, **caractérisé en ce que** la première conformation en creux présente une section non circulaire, en particulier une section polygonale, comme une section triangulaire, ou une section sensiblement polygonale, comme une section trilobée, et/ou la deuxième conformation en creux présente une section non circulaire, en particulier une section polygonale, comme une section triangulaire, ou une section sensiblement polygonale, comme une section trilobée.

3. Rivet selon l'une des revendications précédentes, **caractérisé en ce que** le premier élément de préhension est orienté selon l'axe longitudinal et/ou le deuxième élément de préhension est orienté selon l'axe longitudinal.

4. Rivet selon l'une des revendications précédentes, **caractérisé en ce que** les premier et deuxième éléments de préhension sont disposés coaxialement à l'axe longitudinal.

5. Rivet selon l'une des revendications précédentes, **caractérisé en ce que** les première (20) et deuxième (30) parties sont séparées par une zone (1d) de moindre résistance mécanique, en particulier une zone de moindre résistance mécanique au cisaillement, orientée sensiblement perpendiculairement à l'axe longitudinal (10), située à l'interface première - deuxième parties.

6. Rivet selon la revendication précédente, **caractérisé en ce que** la zone (1d) de moindre résistance mécanique comprend une gorge, notamment une gorge annulaire, en particulier une gorge annulaire extérieure.

7. Rivet selon la revendication précédente, **caractérisé en ce que** la gorge comprend un diamètre de fond (dmin) inférieur à 0.9 fois, voire inférieur à 0.85 fois, voire inférieur à 0.8 fois le diamètre maximal (Dmax) de la deuxième partie, en particulier du corps et/ou **en ce que** la gorge présente une largeur (11d) de fond, mesurée selon l'axe longitudinal, comprise entre 0,03 mm et 0,07 mm, typiquement 0,05 mm et/ou **en ce qu'**un ou plusieurs flancs (12d) de la gorge présente ou constitue un chanfrein (13d), par exemple un chanfrein présentant un angle (a) à 45° ou à 60°, s'étendant du fond de la gorge jusqu'à l'extérieur de la gorge.

8. Rivet selon l'une des revendications précédentes, **caractérisé en ce qu'**il comprend une saillie radiale (1f) ou un tenon ou un excentrique ou une roue ou un pignon.

9. Rivet selon l'une des revendications précédentes, **caractérisé en ce que** les premier et deuxième éléments de préhension sont tels qu'ils permettent d'appliquer respectivement sur les première et deuxième parties des actions mécaniques provoquant la rupture par cisaillement des première et deuxième parties du rivet.

10. Mécanisme horloger (100) comprenant un rivet selon l'une des revendications précédentes.

11. Mouvement horloger (110) comprenant un rivet (1) selon l'une des revendications 1 à 9 ou un mécanisme selon la revendication précédente.

12. Pièce d'horlogerie (120), en particulier montre bracelet, comprenant un rivet (1) selon l'une des revendications 1 à 9 ou un mécanisme selon la revendication 10 ou un mouvement selon la revendication précédente.

13. Procédé de démontage d'un assemblage incluant un rivet (1) selon l'une des revendications 1 à 9, comprenant les étapes suivantes :
- saisir la première partie du rivet, notamment par introduction d'un outil selon la revendication précédente dans le premier élément de préhension,
- saisir la deuxième partie du rivet, notamment par introduction d'un outil selon la revendication précédente dans le deuxième élément de préhension,
- exercer une sollicitation mécanique de la première partie sur la deuxième partie, notamment une sollicitation mécanique de cisaillement de la première partie sur la deuxième partie relativement à l'axe longitudinal (10), de sorte à rompre les première et deuxième parties du rivet.

## Patentansprüche

1. Uhrniet (1), umfassend:
- eine Längsachse (10);
- einen ersten Teil (20), insbesondere einen Kopf (50);
- einen zweiten Teil (30), insbesondere einen Körper (60),
wobei der erste Teil ein erstes Greifelement (1a) umfasst, das den ersten Teil mechanisch beaufschlagen kann, und der zweite Teil ein zweites Greifelement (1b) umfasst, das den zweiten Teil mechanisch beaufschlagen kann, wobei das erste und das zweite Greifelement derart sind, dass sie das Aufbringen von mechanischen Einwirkungen auf den ersten bzw. zweiten Teil gestatten, die das Brechen an einer Schnittstelle des ersten und des zweiten Teils des Niets hervorrufen, wobei das erste Greifelement eine erste hohle Konfiguration umfasst und/oder das zweite Greifelement eine zweite hohle Konfiguration umfasst, wobei die eine von der ersten hohlen Konfiguration und der zweiten hohlen Konfiguration in der Verlängerung der anderen angeordnet ist, so dass sie eine einzige hohle Konfiguration bilden.

2. Niet nach Anspruch 1, **dadurch gekennzeichnet, dass** die erste hohle Konfiguration einen nicht kreisförmigen Querschnitt, insbesondere einen polygonalen Querschnitt wie einen dreieckigen Querschnitt, oder einen im Wesentlichen polygonalen Querschnitt wie einen dreilappigen Querschnitt aufweist und/oder die zweite hohle Konfiguration einen nicht kreisförmigen Querschnitt, insbesondere einen polygonalen Querschnitt wie einen dreieckigen Querschnitt, oder einen im Wesentlichen polygonalen Querschnitt wie einen dreilappigen Querschnitt aufweist.

3. Niet nach einem der vorhergehenden Ansprüche, **dadurch gekennzeichnet, dass** das erste Greifelement gemäß der Längsachse ausgerichtet ist und/oder das zweite Greifelement gemäß der Längsachse ausgerichtet ist.

4. Niet nach einem der vorhergehenden Ansprüche, **dadurch gekennzeichnet, dass** das erste und das zweite Greifelement koaxial zu der Längsachse angeordnet sind.

5. Niet nach einem der vorhergehenden Ansprüche, **dadurch gekennzeichnet, dass** der erste (20) und der zweite (30) Teil durch einen Bereich (1d) geringerer mechanischer Festigkeit, insbesondere einen Bereich geringerer mechanischer Festigkeit gegenüber Scherung getrennt sind, der im Wesentlichen senkrecht zu der Längsachse (10) ausgerichtet und an der Schnittstelle zwischen dem ersten und dem zweiten Teil angeordnet ist.

6. Niet nach dem vorhergehenden Anspruch, **dadurch gekennzeichnet, dass** der Bereich (1d) geringerer mechanischer Festigkeit eine Nut, insbesondere eine ringförmige Nut, insbesondere eine äußere ringförmige Nut, umfasst.

7. Niet nach dem vorhergehenden Anspruch, **dadurch gekennzeichnet, dass** die Nut einen Bodendurchmesser (dmin) von weniger als dem 0,9-Fachen oder weniger als dem 0,85-Fachen oder weniger als dem 0,8-Fachen des maximalen Durchmessers (Dmax) des zweiten Teils, insbesondere des Körpers umfasst und/oder dass die Nut eine entlang der Längsachse gemessene Bodenbreite (11d) zwischen 0,03 mm und 0,07 mm, üblicherweise 0,05 mm, aufweist und/oder dass eine oder mehrere Flanken (12d) der Nut eine Abschrägung (13d), beispielsweise eine Abschrägung mit einem Winkel (α) von 45° oder von 60°, aufweisen oder darstellen, die sich von dem Boden der Nut bis zu der Außenseite der Nut erstreckt.

8. Niet nach einem der vorhergehenden Ansprüche, **dadurch gekennzeichnet, dass** er einen radialen Vorsprung (1f) oder einen Stift oder einen Exzenter oder ein Rad oder ein Ritzel umfasst.

9. Niet nach einem der vorhergehenden Ansprüche, **dadurch gekennzeichnet, dass** das erste und das zweite Greifelement derart sind, dass sie das Aufbringen von mechanischen Einwirkungen auf den ersten bzw. zweiten Teil gestatten, die das Abscheren des ersten und des zweiten Teils des Niets hervorrufen.

10. Uhrmechanismus (100), umfassend einen Niet nach einem der vorhergehenden Ansprüche.

11. Uhrwerk (110), umfassend einen Niet (1) nach einem der Ansprüche 1 bis 9 oder einen Mechanismus nach dem vorhergehenden Anspruch.

12. Uhr (120), insbesondere Armbanduhr, umfassend einen Niet (1) nach einem der Ansprüche 1 bis 9 oder einen Mechanismus nach Anspruch 10 oder ein Werk nach dem vorhergehenden Anspruch.

13. Verfahren zum Auseinanderbauen eines Verbunds, der einen Niet (1) nach einem der Ansprüche 1 bis 9 aufweist, umfassend die folgenden Schritte:
- Ergreifen des ersten Teils des Niets, insbesondere durch Einführen eines Werkzeugs nach dem vorhergehenden Anspruch in das erste Greifelement,
- Ergreifen des zweiten Teils des Niets, insbesondere durch Einführen eines Werkzeugs nach dem vorhergehenden Anspruch in das zweite Greifelement,
- Ausüben einer mechanischen Beaufschlagung des ersten Teils auf den zweiten Teil, insbesondere einer mechanischen Scherbeaufschlagung des ersten Teils auf den zweiten Teil bezüglich der Längsachse (10), so dass der erste und der zweite Teil des Niets abgebrochen werden.

## Claims

1. A horological rivet (1) comprising:
- a longitudinal axis (10);
- a first part (20), in particular a head (50);
- a second part (30), in particular a body (60),
the first part comprising a first handling element (1a) that is able to mechanically stress the first part, and the second part comprising a second handling element (1b) that is able to mechanically stress the second part, the first and second handling elements being such that they make it possible to apply mechanical actions to the first and the second part, respectively, that cause the first and second parts of the rivet to break at an interface between the first and second parts, the first handling element comprising a first hollow shaped portion and/or the second handling element comprising a second hollow shaped portion, the first hollow shaped portion and the second hollow shaped portion are arranged in continuation of one another so as to form one single hollow shaped portion.

2. The rivet as claimed in claim 1, wherein the first hollow shaped portion has a noncircular section, in particular a polygonal section, for instance a triangular section, or a substantially polygonal section, for instance a trilobal section, and/or the second hollow shaped portion has a noncircular section, in particular a polygonal section, for instance a triangular section, or a substantially polygonal section, for instance a trilobal section.

3. The rivet as claimed in one of the preceding claims, wherein the first handling element is oriented along the longitudinal axis and/or the second handling element is oriented along the longitudinal axis.

4. The rivet as claimed in one of the preceding claims, wherein the first and second handling elements are disposed coaxially with the longitudinal axis.

5. The rivet as claimed in one of the preceding claims, wherein the first (20) and second (30) parts are separated by a region (1d) of lower mechanical strength, in particular a region of lower mechanical shear strength, that is oriented substantially perpendicularly to the longitudinal axis (10) and is situated at the first part/second part interface.

6. The rivet as claimed in the preceding claim, wherein the region (1d) of lower mechanical strength comprises a groove, notably an annular groove, in particular an external annular groove.

7. The rivet as claimed in the preceding claim, wherein the groove comprises a bottom diameter (dmin) less than 0.9 times, or even less than 0.85 times, or even less than 0.8 times the maximum diameter (Dmax) of the second part, in particular of the body, and/or wherein the groove has a bottom width (11d), measured along the longitudinal axis, of between 0.03 mm and 0.07 mm, typically 0.05 mm, and/or wherein one or more sidewalls (12d) of the groove has/have or form(s) a chamfer (13d), for example a chamfer having an angle (a) of 45° or 60°, extending from the bottom of the groove to the outside of the groove.

8. The rivet as claimed in one of the preceding claims, wherein said rivet comprises a radial projection (1f) or a post or an eccentric or a wheel or a pinion.

9. The rivet as claimed in one of the preceding claims, wherein the first and second handling elements being such that they make it possible to apply mechanical actions to the first and the second part, respectively, that cause the first and second parts of the rivet to shear.

10. A timepiece mechanism (100) comprising a rivet as claimed in one of the preceding claims.

11. A timepiece movement (110) comprising a rivet (1) as claimed in one of claims 1 to 9 or a mechanism as claimed in the preceding claim.

12. A timepiece (120), in particular a wristwatch, comprising a rivet (1) as claimed in one of claims 1 to 9 or a mechanism as claimed in claim 10 or a movement as claimed in the preceding claim.

13. A method for removing an assembly including a rivet (1) as claimed in one of claims 1 to 9, comprising the following steps of:
- taking hold of the first part of the rivet, notably by introducing a tool as claimed in the preceding claim into the first handling element,
- taking hold of the second part of the rivet, notably by introducing a tool as claimed in the preceding claim into the second handling element,
- exerting mechanical stress of the first part on the second part, notably mechanical shear stress of the first part on the second part relative to the longitudinal axis (10), so as to break the first and second parts of the rivet.
